(19) Europäisches Patentamt
European Patent Office
Office européen des brevets

(11) Veröffentlichungsnummer: **0 197 290
B1**

(12) EUROPÄISCHE PATENTSCHRIFT

(45) Veröffentlichungstag der Patentschrift: 01.08.90

(51) Int. Cl.⁵: **H 04 L 12/00**

(21) Anmeldenummer: 86102735.7

(22) Anmeldetag: 03.03.86

(54) Schaltungsanordnung für Fernmeldeanlagen, insbesondere Fernsprechvermittlungsanlagen, in denen zu übertragenden Nachrichten jeweils eine Artinformation vorausgeschickt wird.

(30) Priorität: 28.03.85 DE 3511324

(43) Veröffentlichungstag der Anmeldung:
15.10.86 Patentblatt 86/42

(45) Bekanntmachung des Hinweises auf die
Patenterteilung:
01.08.90 Patentblatt 90/31

(84) Benannte Vertragsstaaten:
AT BE CH DE FR GB IT LI NL SE

(56) Entgegenhaltungen:
EP-A-0 121 188
WO-A-85/00947
DE-A-3 311 043

IBM JOURNAL OF RESEARCH AND
DEVELOPMENT, Band 28, Nr. 4, Juli 1984,
Seiten 444-453, Armonk, US; E. HOPNER et al.:
"The digital data exchange - A space-division
switching system"
COMPUTER DESIGN, Nr. 3, März 1984, Seiten
111-121, Winchester, US; A.J. D'ARCY:
"Comnet: A custom PBX/LAN design"

(73) Patentinhaber: Siemens Aktiengesellschaft
Wittelsbacherplatz 2
D-8000 München 2 (DE)

(72) Erfinder: Mattis, Renate
Brehmstrasse 212
D-8000 München 90 (DE)
Erfinder: Seidel, Günther, Ing. grad.
August-Zeune-Weg 4
D-8000 München 70 (DE)
Erfinder: Übelhack, Heinrich, Ing. grad.
Am Büchl 35
D-8024 Oberhaching (DE)
Erfinder: Homer, Russel D.
Wolfratshauserstrasse 135a
D-8000 München 71 (DE)

## Beschreibung

Die Erfindung betrifft eine Schaltungsanordnung zum Aufbau einer Nachrichtenverbindung für Fernmeldeanlagen, insbesondere Fernsprechvermittlungsanlagen, in denen den zu übermittelnden Nachrichten einer von einer Mehrzahl von verschiedenen möglichen Nachrichtenarten je eine entsprechende Artinformation über die jeweils tatsächlich gegebene Nachrichtenart vorausgeschickt wird, und in denen in Abhängigkeit der sich gegebenenfalls laufend ändernden Betriebssituation von zwei zum Senden und/oder Empfangen von Nachrichten und vorzugsweise wenigstens teilweise auch zum Verarbeiten derselben eingerichteten Nachrichtenübermittlungseinrichtungen die eine für eine von der jeweils anderen Nachrichtenübermittlungseinrichtung auszusendende Nachricht je nach der zurzeit gegebenen Betriebssituation sowie je nach der angekündigten Nachrichtenart empfangsbereit ist oder nicht, und in denen vor einer Nachrichtenübermittlung eine die Bereitschaft oder Nichtbereitschaft betreffende Meldung engegen der Richtung der Artinformation zur Freigabe oder Unterbindung dieser Übermittlung übertragen wird, und in denen die Nachrichten, Informationen und Meldungen in bit-Portionen einheitlichen Wort-Formats übertragen werden.

Eine Schaltungsanordnung dieser Art ist bereits durch die DE—OS 33 11 043 (VPA P 1198 DE) bereits bekannt. Darin wird zur Vorbereitung der Übertragung einer längeren Nachricht zunächst eine Artinformation übertragen, mit der angekündigt wird, von welcher Nachrichtenart eine jeweils zur Übertragung anstehende Nachricht ist. Da empfangende Einrichtungen je nach der jeweils momentan gegebenen Betriebssituation für einen Empfang einer Nachricht einer bestimmten Nachrichtenart bereit sein können oder auch nicht bereit sein können, wird durch den der Nachrichtenübertragung vorauslaufenden Austausch von Artinformation und Meldung ermittelt, ob die jeweils beabsichtigte Nachrichtenübertragung unmittelbar stattfinden kann oder nicht bzw. auf einen späteren Zeitpunkt verschoben werden muß.

Einrichtungen bekannter Art, die in der angegebenen Weise arbeiten, tragen das Problem eines sich zum eigentlichen Nachrichtenübertragungsvorgang addierenden vorausgehenden Zeitbedarfes für den Austausch von Artinformation und Meldung in sich. Hinzu kommt bei der Einrichtung, die die jeweilige Nachricht empfangen soll, ein Zeitbedarf für die Auswertung der jeweiligen Artinformation, das heißt für die Erkennung der jeweiligen Nachrichtenart sowie für ein Abrufen der dieser Nachrichtenart entsprechenden artspezifischen Meldung, die dann zur Aussendung entgegen der Artinformation gebracht werden muß.

Für die Erfindung besteht die Aufgabe, in einer Schaltungsanordnung der eingangs angegebenen Art den Zeitbedarf für die Vorbereitung einer Nachrichtenübertragung herabzusetzen.

Die Erfindung löst die gestellte Aufgabe dadurch, daß die Schaltungsanordnung so ausgestaltet ist, daß sie veranlaßt, daß an die andere Nachrichtenübermittlungseinrichtung ein jede der verschiedenen Nachrichtenarten betreffendes Sortiment von einzelnen artspezifischen Meldungen übertragen wird, von denen jede an die genannte andere Nachrichtenübermittlungseinrichtung die jeweilige Bereitschaft oder Nichtbereitschaft einzeln bezüglich jeder der verschiedenen möglichen Nachrichtenarten meldet, und daß ein Vergleich der Artinformation mit der betreffenden artspezifischen Meldung in der anderen Nachrichtenübermittlungseinrichtung zur Freigabe der Nachrichtenübermittlung oder deren Unterbindung bzw. zeitlichen Verschiebung führt, und daß ebenfalls ein Vergleich der Artinformation mit der betreffenden artspezifischen Meldung in der einen Nachrichtenübermittlungseinrichtung stattfindet, und daß durch dessen Ergebnis ein anschließender Empfang der betreffenden Nachricht vorbereitet oder übergangen wird, und daß im letzteren Falle der Empfang einer Artinformation einer nächstfolgenden Nachricht vorbereitet wird.

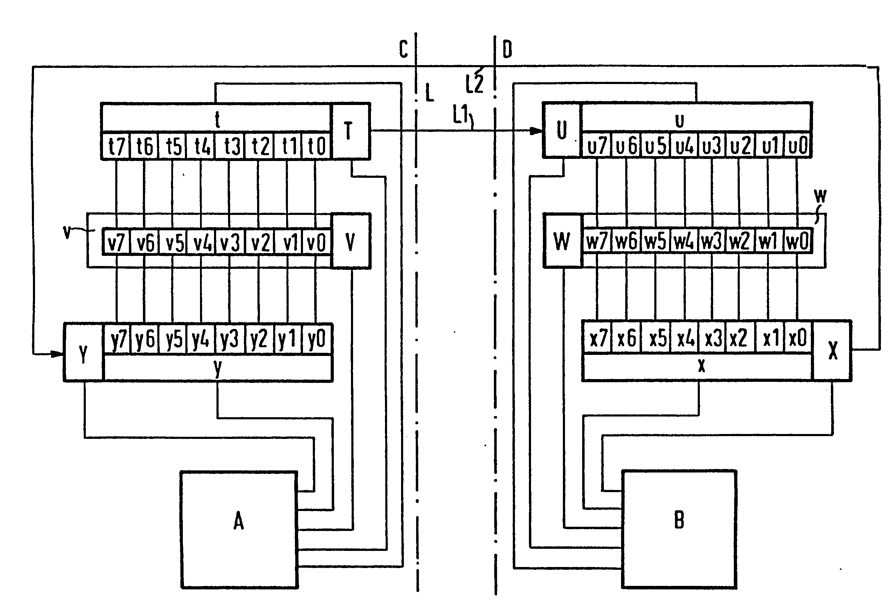

In der Zeichnung ist ein Ausführungsbeispiel der Erfindung nur in wesentlich zu ihrem Verständnis beitragenden Bestandteilen dargestellt, worauf sie jedoch keineswegs beschränkt ist.

Zwei Nachrichtenübermittlungseinrichtungen C und D sind über ein Kanalpaar L, bestehend aus zwei Übertragungskanälen L1 und L2 für die eine und für die andere Nachrichtenübertragungsrichtung mit einander verbunden. Die Nachrichtenübermittlungseinrichtungen mögen zu zentralen oder dezentralen Steuereinrichtungen (Prozessoren) in Fernsprechvermittlungsanlagen gehören. Hierbei kann es sich zum Beispiel um den Prozessor in einem Konzentrator und um den in einer Anschlußgruppe (vgl. Zeitschrift "telcom report", Beiheft 1981, Seite 7ff. und 19ff. bzw 22ff.) einer Zeitmultiplex-Fernsprechvermittlungsanlage handeln, oder um den Prozessor in einem Konzentrator und den einer Mehrfachteilnehmeranschlußschaltung.

Das Kanalpaar L möge Teil eines PCM-Systems mit zwei mal zweiunddreißig Kanälen sein, das heißt, zweiunddreißig Kanäle stehen für die eine Übertragungsrichtung (L1) und zweiunddreißig Kanäle stehen für die andere Übertragungsrichtung (L2) zur Verfügung. Von ihnen dient ein Kanalpaar zur Übertragung von einer Signalisierung dienenden Nachrichten. Hierbei handelt es sich um Nachrichten verschiedener Arten, zum Beispiel Belegungskennzeichen, Wahlkennzeichen, Aufschaltekennzeichen, Schaltkennzeichen für verschiedene Facilities, Auslösekennzeichen, Gebührenzählinformationen, Besetztkennzeichen, Wahlendekennzeichnen, Meldekennzeichen, Schlußzeichen, ferner um sicherungstechnische Meldungen, Steuerinformationen zur Verbindungswegeinstellung über Koppeleinrichtungen und dergleichen.

Die Nachrichtenübermittlungseinrichtungen C und D stehen also über ein Kanalpaar L1/L2 miteinander in Verbindung, wodurch Nachrichten, Informationen und Meldungen in jeder der beiden Richtungen auch unabhängig voneinander übertragen werden können. Diese Übertragung erfolgt in bit-Portionen einheitlichen Wort-Formats, zum Beispiel in bekannter Weise in Form von PCM-Worten von je acht Bit. Hierzu ist jede der beiden Nachrichenübermittlungseinrichtungen mit einer Sendeeinrichtung T bzw. X ausgerüstet. Jede Sendeeinrichtung steht mit einem achtstufigen Sende-Schieberegister t0—t7 bzw. x0—x7 in Verbindung, dem ein Sendespeicher t bzw. x zugeordnet ist.

Jede der Nachrichtenübermittlungseinrichtungen weist empfangsseitig eine Empfangseinrichtung U bzw. Y auf, die mit einem ebenfalls achtstufigen Empfangs-Schieberegister u0—u7 bzw. y0—y7 verbunden ist. Jedem der beiden Schieberegister ist ein Empfangsspeicher u bzw. y zugeordnet. Ferner sind in beiden Nachrichtenübermittlungseinrichtungen ebenfalls achtstufige Vergleicher v bzw. w vorgesehen, die einem bitweisen Vergleich zwischen den Inhalten in den Schieberegistergliedern t0—t7 einerseits und y0—y7 andererseits eines Sende-Schieberegisters und eines Empfangs-Schieberegisters dienen. Zur Auswertung der Vergleichsergebnisse dienen Auswerter V bzw. W in jeder der beiden Nachrichtenübermittlungseinrichtungen.

Die zu übermittelnden Nachrichten befinden sich zunächst in den Prozessoren A bzw. B und gelangen durch die Übermittlung zu diesen Prozessoren B bzw. A. Diesen mögen diese Nachrichten zwecks Übermittlung zunächst übergeben, angeboten oder bereitgestellt werden. Dementsprechende weitere Schalteinrichtungen können diese Prozessoren in an sich bekannter Weise beigeordnet sein, also Schalteinrichtungen, die Nachrichtenquellen bzw. Nachrichtensenken darstellen.

Die zu übermittelnden Nachrichten unterscheiden sich in Nachrichten von bis zu sechs verschiedenen Nachrichtenarten. Verschiedene Beispiele solcher Nachrichtenarten wurden bereits genannt. Da die Nachrichten in der jeweils empfangenden Nachrichtenübermittlungseinrichtung zu speichern, zwischenzuspeichern oder ganz oder teilweise zu verarbeiten oder von ihr an eine Nachrichten senke weiterzuleiten sind, und da hierfür in Abhängigkeit von jeweils gegebenen und gegebenenfalls sich laufend ändernden Betriebssituation Einschränkungen bestehen können, ist eine Nachrichtenübermittlungseinrichtung, die eine Nachricht empfangen soll, je nach der zur Zeit gegebenen Betriebssituation, sowie je nach der gegebenen Art der jeweils zur Nachrichtenübermittlung anstehenden Nachricht empfangsbereit oder nicht. So kann es zum Beispiel sein, daß ein Speicherbereich, der zur Aufnahme von Wahlkennzeichen dient, bereits voll ist, so daß eine Aufnahme weiterer Wahlkennzeichen erst wieder zu späterem Zeitpunkt erfolgen kann. Oder es kann sein, daß infolge Arbeitsüberlastung eines Prozessors dieser zur Zeit keine weiteren Verbindungswünsche mehr entgegennehmen kann, was praktisch bedeutet, daß er für die Aufnahme eines Belegungskennzeichens zur Zeit nicht aufnahmebereit ist.

Für Fälle der zuvor im Sinne von Beispielen angegebenen Art ist vorgesehen, daß den zu übermittelnden Nachrichten jeweils einer von einer Mehrzahl von Nachrichtenarten je eine entsprechende Artinformation über die zur Übermittlung anstehende Nachrichtenart über den betreffenden Nachrichtenkanal vorausgeschickt wird.

Wie bereits ausgeführt wurde, stehen Nachrichten der verschiedenen Nachrichtenarten in jedem der beiden Prozessoren oder in entsprechenden, ihnen beigeordneten Einrichtungen zwecks Nachrichtenübermittlung zu der jeweils anderen Nachrichtenübermittlungseinrichtung an. Ein Prozessor, zum Beispiel der Prozessor A, bildet jeweils pro Nachreicht eine ihrer Nachrichtenart entsprechende Artinformation und übergibt diese dem Sendespeicher, zum Beispiel t, in Form einer 8-bit-Parallel-Information. Der Sendespeicher lädt damit das Schieberegister über acht Paralleleingänge seiner Schieberegisterglieder t0—t7. t0—t7. Danach bringt die Sendeeinrichtung T die acht Bit der Artinformation über den Kanal L1 zur Aussendung. Sie werden mit Hilfe der Empfangseinrichtung U aufgenommen und dem Schieberegister u7—u0 zugeführt.

Damit die Nachrichtenübermittlungseinrichtung, die eine Nachricht an die andere Nachrichtenübermittlungseinrichtung abzusetzenhat, erkennen kann, ob letztere dafür zur Zeit empfangsbereit ist oder nicht, sendet diese vor einer Übermittlung der Nachricht eine die Bereitschaft oder Nichtbereitschaft betreffende Meldung entgegen der Artinformation an die erstgenannte Nachrichtenübermittlungseinrichtung zur Freigabe oder Unterbindung dieser Nachrichtenübermittlung. In diesem Zusammenhang ist vorgesehen, daß gleichzeitig mit der Artinformation in der Gegenrichtung, also von derjenigen Nachrichtenübermittlungseinrichtung, die die betreffende Nachricht aufnehmen soll, zu derjenigen Nachrichtenübermittlungseinrichtung, die diese Nachricht abzusetzen hat, ein jede der verschiedenen möglichen Nachrichtenarten betreffendes Sortiment von einzelnen artspezifischen Meldungen übertragen wird, von denen jede an die erstgenannte Nachrichtenübermittlungseinrichtung die jeweilige Bereitschaft oder Nichtbereitschaft einzeln bezüglich jeder der verschiedenen möglichen Nachrichtenarten meldet. In diesem Zusammenhang sei angenommen, es seien sechs verschiedene Nachrichtenarten insgesamt vorgesehen. Das erste Bit eines PCM-Wortes zur Übermittlung einer Artinformation habe immer den Wert 1. Das zweite bis siebente Bit möge zur Übermittlung von sechs verschiedenen möglichen Artinformationen dienen. Dabei soll also immer einem Bit eine Artinformation fest zugeordnet sein. Das letzte Bit möge das Ende des PCM-Wortes signalisieren und wieder den Wert 1 haben.

Sobald die Übermittlung einer Artinformation gestartet wird, wird diese Tasache in derjenigen Nachrichtenübermittlungseinrichtung, die eine Nachricht aufnehmen soll, erkannt, zum Beispiel mit Hilfe der Empfangseinrichtung U. Eine entsprechende Meldung wird zu dem betreffenden Prozessor, zum Beispiel B, weitergegeben. Je nach der zur Zeit vorliegenden Betriebssituation, wonach diese Nachrichtenübermittlungseinrichtung (D) für Nachrichten einiger Nachrichtenarten empfangsbereit sein möge, für Nachrichten der übrigen Nachrichtenart aber nicht, hält sie für jede Nachrichtenart eine artspezifische Meldung bereit. Dieses Bereithalten kann durch Speicherung im Sendespeicher x oder im Schieberegister x0—x7 geschehen, solange dieser bzw. dieses nicht zur sendemäßigen Übermittlung einer Nachricht herangezogen wird. Erkennt als der Prozessor B, daß über die Empfangseinrichtung U eine Artinformation eintrifft, erkennt er also den Beginn des Eintreffens dieser Artinformation, so veranlaßt er eine unverzügliche Aussendung des Sortiments von einzelnen artspezifischen Meldungen über den anderen der beiden Kanäle.

Nach dieser Übermittlung der Artinformation von der Nachrichtenübermittlungseinrichtung C und des Sortiments der artspezifischen Meldungen von der Nachrichtenübermittlungseinrichtung D (jeweils zur anderen Nachrichtenübermittlungseinrichtung) mögen diese Artinformationen sowie diese Meldungen außerdem jeweils in der aussendenden Nachrichtenübermittlungseinrichtung gespeichert vorliegen und zwar im jeweiligen Sende-Schieberegister. Bei den beiden Sendevorgängen erfolgt also jeweils keine Löschung der gesendeten Zeichen. Folglich liegen nach der gleichzeitigen oder nahezu gleichzeitigen Übermittlung der Artinformation sowie des Sortiments von artspezifischen Meldungen beide in beiden Nachrichtenübermittlungseinrichtungen gespeichert in den betreffenden Schieberegistern vor. In beiden Nachrichtenübermittlungseinrichtungen erfolgt sodann ein Vergleich der Artinformation mit den artspezifischen Meldungen. Aus beiden Vergleichen ergibt sich, ob die beabsichtigte Nachrichtenübermittlung erfolgen kann oder nicht. Ein Vergleich der Artinformation mit der ihr jeweils entsprechenden artspezifischen Meldung führt also in derjenigen Nachrichtenübermittlungseinrichtung, die eine Nachricht auszusenden hat, zur Freigabe der Nachrichtenübermittlung oder deren Unterbindung bzw. zeitlichen Verschiebung. Ein Vergleich der Artinformation mit der betreffenden artspezifischen Meldung in derjenigen Nachrichtenübermittlungseinrichtung, die die betreffende Nachricht aufnehmen soll, führt hier dazu, daß durch dessen Ergebnis ein anschließender Empfang der betreffenden Nachricht vorbereitet oder übergangen wird, und daß im letzteren Falle der Empfang einer Artinformation einer nächstfolgenden Nachricht vorbereitet wird.

Gemäß dem Ausführungsbeispiel leitet der Beginn der von der Nachrichtenübermittlungseinrichtung C ausgesendeten Artinformation bei ihrem Eintreffen in der Nachrichtenübermittlungseinrichtung D hier die Aussendung des Sortiments von artspezifischen Meldungen ein. Dieser Beginn der in der Nachrichtenübermittlungseinrichtung D eintreffenden Artinformation wird mittels der Empfangseinrichtung U erkannt und dem Prozessor B gemeldet. Dieser veranlaßt unverzüglich die Aussendung des im Sendespeicher X oder im Scheiberegister x0—x7 bereitgehaltenen Sortiments von artspezifischen Meldungen. Diese Aussendung wird mittels der Sendeeinrichtung X bewerkstelligt.

Im Unterschied hierzu besteht auch die Möglichkeit, daß der Beginn der Aussendung einerseits der Artinformation und andererseits des Sortiments von artspezifischen Meldungen durch eine gemeinsame dritte Einrichtung, zum Beispiel eine gemeinsame Steuereinrichtung, herbeigeführt wird. Dies kann zum Beispiel in der Weise geschehen, daß von einer gemeinsamen Steuereinrichtung ein Befehl an eine der Nachrichtenübermittlungseinrichtungen gegeben wird, und daß diese einerseits durch eine Ansteuerung einer anderen Nachrichtenübermittlungseinrichtung per Ansteueradresse einen Abfrageanreiz an sie überträgt, worauf letztere zunächst eine Artinformation in der angegebenen Weise zur Aussendung bringt, andererseits aber bereits gleichzeitig die Aussendung des Sortiments von artspezifischen Meldungen einleitet und abwickelt.

Bei der bisherigen Beschreibung wurde davon ausgegangen, daß eine Nachrichtenübermittlungseinrichtung nur eine einzige Nachricht zu übermitteln hat. Dementsprechend gibt sie auch nur eine einzige Artinformation ab. Entgegen dieser einen Artinformation wird das Sortiment von artspezifischen Meldungen übertragen. Jeder Nachrichtenart ist jeweils eine bestimmte Stelle innerhalb des aus insgesamt acht Bit bestehenden PCM-Wortes zugeordnet. Ist jeweils eine Nachrichtenart durch eine Artinformation markiert, so möge das betreffende Bit innerhalb des jeweiligen PCM-Wortes den Binärwert 1 haben, wohingegen es anderenfalls den Binärwert O hat. Entsprechendes gilt für das Sortiment von artspezifischen Meldungen, die entgegen der Artinformation übermittelt werden.

Hat die Übermittlung einer Artinformation und des Sortiments von artspezifischen Meldungen stattgefunden, so stehen sich im Sende-Schieberegister, zum Beispiel t0—t7, und im Empfangs-Schieberegister, zum Beispiel y0—y7, Artinformation und artspezifische Meldungen gemäß den verschiedenen möglichen Nachrichtenarten einzeln gegenüber. Mit Hilfe der Vergleicher v bzw. w ist es dadurch in einfacher Weise möglich, jeweils eine Artinformation mit der artgemäß entsprechenden artspezifischen Meldung zu vergleichen. Mit Hilfe der Auswerter V bzw. W wird festgestellt, zu welcher Artinformation eine artgemäß entsprechende artspezifische Meldung vorliegt. Dies gilt jeweils für beide Nachrichtenübermittlungseinrichtungen, das heißt also sowohl für diejenige, welche eine Nachricht jeweils abzusetzen hat als auch diejenige, welche diese Nachricht aufnehmen soll.

Darüber hinaus besteht aus die Möglichkeit, daß zugleich mehrere Artinformationen, die mehrere zugleich von einer Nachrichtenübermittlungseinrichtung zur Übermittlung anstehende Nachrichten verschiedener Nachrichtenarten betreffen, übertragen werden. Dies geht also davon aus, daß in einer Nachrichtenübermittlungseinrichtung gleichzeitig mehrere Nachrichten verschiedener Nachrichtenarten vorliegen, die zur jeweils anderen Nachrichtenübermittlungseinrichtung übertragen werden sollen. In diesem Zusammenhang ist weiterhin vorgesehen, daß sowohl in der einen als auch in der anderen Nachrichtenübermittlungseinrichtung der bereits beschriebene Vergleich entsprechend mehrfach erfolgt. In diesem Zusammenhang wurde bereits auf den entsprechend den mehrstufigen Schieberegistern ebenfalls mehrstufigen Vergleicher v bzw. w hingewiesen, der einen Vergleich bit-weise pro PCM-Wort ermöglicht. In diesem Zusammenhang ist weiterhin vorgesehen, daß in beiden Nachrichtenübermittlungseinrichtungen eine Prioritätsreihenfolge bezüglich aller Nachrichtenarten gespeichert ist. Dies ist dadurch gegeben, daß die Schieberegisterglieder in einer festen Reihenfolge geordnet sind, und daß auch die einzelnen Vergleicherstufen v0—v7, bzw. w0—w7, ebenfalls in einer festen Reihenfolge geordnet sind, aus der sich die genannte Prioritätsreihenfolge ableitet. Gemäß dieser in beiden Nachrichtenübermittlungseinrichtungen gespeicherten Prioritätsreihenfolge bezüglich aller möglicher Nachrichtenarten wird nach Übermittlung einer Mehrzahl von Artinformationen in einem PCM-Wort und nach Übermittlung eines entsprechenden Sortiments von artspezifischen Meldungen in beiden Nachrichtenübermittlungseinrichtungen mit Hilfe der Auswerter V und W diejenige Nachrichtenart festgestellt, die gemäß den vorliegenden Artinformationen sowie gemäß den vorliegenden artspezifischen Meldungen, sowie gemäß den hieraus gezogenen Vergleichen und· schießlich gemäß der genannten Prioritätsreihenfolge anschließend zur Übermittlung zu kommen hat. Von den mehreren zur Übermittlung anstehenden Nachrichten verschiedener Nachrichtenarten wird also immer nur eine Nachricht einer Nachrichtenart ausgewählt und übermittelt, und dann beginnt das Spiel von vorne durch Übermittlung der Artinformationen der übrigen zur Übermittlung anstehenden Nachrichten, sowie der entsprechenden artspezifischen Meldungen usw.

Es besteht auch die Möglichkeit, daß von jeder der beiden Nachrichtenübermittlungseinrichtungen je eine Artinformation und je eine Sortiment von Meldungen zur jeweils anderen Nachrichtenübermittlungseinrichtung ausgesendet wird, und daß in jeder der beiden Nachrichtenübermittlungseinrichtungen anhand der jeweils ausgesendeten Artinformation dementsprechend eine der empfangenen artspezifischen Meldungen ausgewählt wird. Auf diese Weise werden dann also zwei ausgewählte artspezifische Meldungen gewonnen. In diesem Zusammenhang ist weiterhin vorgesehen, daß für die von jeder der beiden Nachrichtenübermittlungseinrichtungen sendbaren Nachrichtenarten in beiden Nachrichtenübermittlungseinrichtungen Prioritätswerte gespeichert sind, und daß nach Maßgabe dieser Prioritätswerte eine der beiden ausgewählten Meldungen bestimmt wird. Anschließend erfolgt die Übermittlung der Nachricht entsprechend dieser Meldung.

Die weitere Beschreibung wendet sich nun solchen technischen Merkmalen im Ausführungsbeispiel der auszugsweise erläuterten Schaltungsanordnung zu, die den Umfang von einzelnen zu übermittelnden Nachrichten betreffen. Bereits in bekannten Schaltungsanordnungen wird in Zusammenhang von über bidirektionale Nachrichtenwege zu übermittelnden Nachrichten jeweils einer von einer Mehrzahl von verschiedenen Nachrichtenarten eine Längenangabe gebildet und vor der Nachrichtenübermittlung übertragen. Dies gilt auch für das vorliegende Ausführungsbeispiel. Ferner wird hier auch eine die jeweilige Nachrichtenart bezeichnende Artinformation gebildet, wie zuvor ausführlich erläutert wurde. Aus der bisherigen Beschreibung geht weiterhin hervor, daß von einer Nachrichtenübermittlungseinrichtung, die eine Nachricht an eine andere Nachrichtenübermittlungseinrichtung abzugeben hat, eine der Nachrichtenart dieser Nachricht jeweils entsprechende Artinformation vorausgeschickt wird. Ferner wurde erläutert, daß praktisch gleichzeitig mit der Übermittlung der Artinformation die Übermittlung des Sortiments von artspezifischen Meldungen in der Gegenrichtung erfolgt.

Die bereits genannte Längenangabe wird im Unterschied zu bekannten Anordnungen in Gegeinrichtung zur Artinformation bzw. zu den Artinformationen übertragen. Die Längenangabe betrifft auch nicht die Länge der jeweils zur Übermittlung in einer Nachrichtenübermittlungseinrichtung anstehenden Nachricht, sondern die Längenangabe gibt im vorliegenden Falle an, für welchen durch die sich gegebenenfalls laufend ändernde Betriebssituation momentan gegebenen Umfang einer Nachricht der betreffenden Nachrichtenart diejenige Nachrichtenübermittlungseinrichtung empfangsbereit ist, die die jeweilige Nachricht empfangen soll. Wie bereits ausgeführt wurde, ist die zu verschiedenen Zeitpunkten bestehende jeweilige Betriebssituation von Zeitpunkt zu Zeitpunkt nicht gleich. Sie kann sich laufend ändern. Dies kann zum Beispiel den Füllungsgrad eines zur Zwischenspeicherung von Wahlkennzeichen vorgesesehenen Speicherabschnittes betreffen. Während die bisherige Beschreibung sich auf den Aspekt konzentrierte, ob eine jeweils zu übermittelnde Nachricht von derjenigen Nachrichtenübermittlungseinrichtung empfangen werden kann, für die sie bestimmt ist, oder ob sie diese Nachricht nicht empfangen kann, wird anschließend der Betriebsfall erläutert, daß die betreffende Nachrichtenübermittlungseinrichtung eine Nachricht der bestimmten Art nur bis zu einem gewissen Nachrichtenumfang aufzunehmen in der Lage ist. Es wird also zünachst in der weiter oben ausführlich beschriebenen Weise mit Hilfe von Artinformation, bzw. Artinformationen, und artspezifischen Meldungen festgestellt, ob eine Nachrichtenübermittlung der betreffenden Nachrichtenart im jeweils gegebenen Zeitpunkt überhaupt möglich ist. Wird eine Nachrichtenübermittlung der jeweiligen Nachrichtenart als grundsätzlich möglich festgestellt, so überträgt diejenige Nachrichtenübermittlungseinrichtung, die die Nachricht aufnehmen soll, entgegen der Artinformation eine Längenangabe, mit der signalisiert wird, welche Länge, zum Beispiel welche Anzahl von PCM-Worten, eine zur Übermittlung anstehende Nachricht maximal haben darf. Im Gegensatz zu bekannten Anordnungen wird die Artinformation zuerst und die Längenangabe danach übertragen. Die Längenangabe wird anschließend an das Sortiment von artspezifischen Meldungen in einem zweiten PCM-Wort übermittelt.

Die entgegen der Artinformation nach dem Sortiment von artspezifischen Meldungen übertragene Längenangabe wird mit Hilfe der betreffenden Empfangseinrichtung, zum Beispiel Y aufgenommen und gelangt über das Empfangs-Schieberegister zum Beispiel y0—y7, zum Empfangsspeicher y, von wo sie zum Prozessor, zum Beispiel A derjenigen Nachrichtenübermittlungseinrichtung, zum Beispiel C, übergeben wird von der aus die beabsichtigte Nachrichtenübermittlung erfolgen soll. Der betreffende Prozessor, zum Beispiel A, vergleicht nun die erhaltene Längenangabe mit der Länge der zu übermittelnden Nachricht. Gemäß dem gewonnenen Vergleichsergebnis findet dann die beabsichtigte Nachrichtenübermittlung statt oder nicht, bzw. diese Nachrichtenübermittlung wird auf einen späteren Zeitpunkt verschoben zu dem dann die ganzen hierfür erforderlichen Vorgänge in der bereits beschriebenen Weise erneut gestartet werden.

Abschließend ist zusammenfassend also festzustellen, daß die Artinformation der Nachricht vorausgeschickt wird, daß zuerst die Artinformation und danach die Längenangabe, und daß die Artinformation in der Richtung der zu übermittelnden Nachricht übertragen wird, dagegen die Länganangabe in der entgegengesetzten Richtung. Im Gegensatz zu bekannten Anordnungen wird die Artinformation nicht empfangsseitig aus einer mit der Nachricht übertragenen Adresse abgeleitet, sondern sie wird sendeseitig gebildet und der zu übermittelnden Nachricht vorausgeschickt. Die Längenangabe bezieht sich auf die durch die Artinformation signalisierte jeweilige Nachrichtenart und gibt jeweils für diese den Umfang an, den eine zu übertragende Nachricht maximal haben darf. Die zurückübertragene Längenangabe sorgt bei einer durch die momentane Betriebssituation gegebenen beschränkten Aufnahmekapazität der empfangenden Nachrichtenübermittlungseinrichtung für Nachrichten der jeweils signalisierten Nachrichtenart gegebenenfalls dafür, daß die betreffende Nachrichtenübermittlung verhindert wird oder auf einen späteren Zeitpunkt verschoben wird, wodurch eine Verstümmelung von Nachrichten oder Engpässe beim Nachrichtenempfang vermieden werden und daß die betreffende Nachrichtenübermittlung stattfinden kann, wenn eine dafür geeignete Betriebssituation wiedergekehrt ist.

**Patentansprüche**

1. Schaltungsanordnung zum Aufbau einer Nachrichtenverbindung für Fernmeldeanlagen, insbesondere Fernsprechvermittlungsanlegen, in denen den zu übermittelnden Nachrichten einer von einer Mehrzahl von verschiedenen möglichen Nachrichtenarten je eine entsprechende Artinformation über die jeweils tatsächlich gegebene Nachrichtenart vorausgeschickt wird, und in denen in Abhängigkeit der sich gegebenenfalls laufend ändernden Betriebssituation von zwei zum Senden und/oder Empfangen von Nachrichten und vorzugsweise wenigstens teilweise auch zum Verarbeiten derselben eingerichteten Nachrichtenübermittlungseinrichtungen (C, D) die eine (z.B. D) für eine von der jeweils anderen Nachrichtenübermittlungseinrichtung (z.B. C) auszusendende Nachricht je nach der zurzeit gegebenen Betriebssituation sowie je nach der angekündigten Nachrichtenart empfangsbereit ist oder nicht, und in denen vor einer Nachrichtenübermittlung eine die Bereitschaft oder Nichtbereitschaft betreffende Meldung entgegen der Richtung der Artinformation zur Freigabe oder Unterbindung dieser Übermittlung übertragen wird, und in denen die Nachrichten, Informationen und Meldungen in bit-Portionen einheitlichen Wort-Formats übertragen werden, dadurch gekennzeichnet, daß die Schaltungsanordnung so ausgestaltet ist, daß sie veranlaßt, daß gleichzeitig mit der Artinformation in der Gegenrichtung, also von der einen Nachrichtenübermittlungseinrichtung (z.B. D), an die andere Nachrichtenübermittlungseinrichtung (z.B. C) eine jede der verschiedenen Nachrichtenarten betreffendes Sortiment von einzelnen artspezifischen Meldungen übertragen wird, von denen jede an die genannte andere Nachrichtenübermittlungseinrichtung (z.B. C) die jeweilige Bereitschaft oder Nichtbereitschaft einzeln bezüglich jeder der verschiedenen möglichen Nachrichtenarten meldet, und daß ein Vergleich der Artinformation mit der betreffenden artspezifischen Meldung in der anderen Nachrichtenübermittlungseinrichtung (z.B. C) zur Freigabe der Nachrichtenübermittlung oder deren Unterbindung bzw. zeitlichen Verschiebung führt, und daß ebenfalls ein Vergleich der Artinformation mit der betreffenden artspezifischen Meldung in der einen Nachrichtenübermittlungseinrichtung (z.B. D) stattfindet und daß durch dessen Ergebnis ein anschließender Empfang der betreffenden Nachricht vorbereitet oder übergangen wird, und daß im letzteren Falle der Empfang einer Artinformation einer nächstfolgenden Nachricht vorbereitet wird.

2. Schaltungsanordnung nach Anspruch 1, dadurch gekennzeichnet, daß der Beginn der von der genannten anderen Nachrichtenübermittlungseinrichtung (z.B. C) ausgesendeten Artinformation bei ihrem Eintreffen in der genannten einen Nachrichtenübermittlungseinrichtung (z.B. D) hier die Aussendung des Sortiments von artspezifischen Meldungen einleitet.

3. Schaltungsanordnung nach Anspruch 1, dadurch gekennzeichnet, daß zugleich mehrere Artinformationen, die mehrere zugleich zur Übermittlung anstehende Nachrichten verschiedener Nachrichtenarten betreffen, übertragen werden, und daß sowohl in der einen als auch in der anderen Nachrichtenübermittlungseinrichtung der Vergleich entsprechend mehrfach erfolgt, und daß anhand einer in beiden Nachrichtenübermittlungseinrichtungen gespeicherten Prioritätsreihenfolge bezüglich aller Nachrichtenarten die Nachricht derjenigen Nachrichtenart festgestellt wird, die demgemäß anschließend zur Übermittlung zu kommen hat.

4. Schaltungsanordnung nach Anspruch 1, dadurch gekennzeichnet, daß der Beginn der Aussendung einerseits der Artinformation und andererseits des Sortiments von artspezifischen Meldungen durch eine gemeinsame dritte Einrichtung, zum Beispiel eine gemeinsame Steuereinrichtung, herbeigeführt wird.

5. Schaltungsanordnung nach Anspruch 1, dadurch gekennzeichnet, daß von jeder der beiden Nachrichtenübermittlungseinrichtungen je eine Artinformation und je ein Sortiment von artspezifischen Meldungen zur jeweils anderen Nachrichtenübermittlungseinrichtung ausgesendet wird, daß in jeder der beiden Nachrichtenübermittlungseinrichtungen anhand der jeweils ausgesendeten Artinformation dementsprechend eine der empfangenen Meldungen ausgewählt wird, und daß für die von jeder der beiden Nachrichtenübermittlungseinrichtungen sendbaren Nachrichtenarten in beiden Nachrichtenübermittlungseinrichtungen Prioritätswerte gespeichert sind, und daß bei Gewinnung zweier ausgewählter Meldungen eine nach Maßgabe dieser Prioritätswerte bestimmt wird.

**Revendications**

1. Montage pour établir une liaison de transmission de données pour des installations de télécommunications, notamment des installations de commutation téléphonique, dans lesquelles préalablement aux données, devant être transmises, qui sont d'un type faisant partie d'une pluralité de différents types possibles de données, et envoyée une donnée relative au type de données respectivement envoyées effectivement, et dans lesquelles en fonction de l'état de fonctionnement, qui varie éventuellement en permanence, de deux dispositifs (C, D) de transmission de données, agencés pour émettre ou recevoir des informations et de préférence, au moins en partie, également pour traiter ces informations, l'un (par exemple D) de ces dispositifs est ou n'est pas prêt pour la réception d'une donnée devant être émise par l'autre dispositif (par exemple C) de transmission de données, en fonction de l'état de fonctionnement déterminé à l'instant présent en en fonction du type de données annoncé, et dans lesquelles, avant une transmission de données, une signalisation concernant l'état de disponibilité ou de non disponibilité de fonctionnement est transmise, en sens opposé du sens de transmission de l'information relative au type, pour arrêter cette transmission, et dans lesquelles les données, les informations et les signalisations sont transmises sous la forme d'ensembles binaires possédant un format de mot unitaire, caractérisé par le fait que le montage est agencé de manière à agir de telle sorte qu'en même temps que l'information relative au type se trouve transmis, dans le sens opposé, c'est-à-dire depuis l'un (par exemple D) des dispositifs de transmission de données à l'autre (par exemple C) des dispositifs de transmission de données, un assortiment, concernant chacun des différents types de données, de différentes signalisations spécifiques des types, dont chacune signale audit autre dispositif (par exemple C) de transmission de données, l'état de disponibilité de fonctionnement ou de non disponibilité de fonctionnement et ce individuellement en rapport avec chacun des différents types possibles de données, et qu'une comparaison entre l'information relative au type et la signalisation concernée spécifique au type, dans l'autre dispositif (par exemple C) de transmission de données conduit à l'autorisation de la transmission de données ou à son interruption ou à son décalage dans le temps, et que, également, une comparaison entre l'information relative au type et la signalisation concernée, spécifique au type, intervient dans le premier dispositif (par exemple D) de transmission de données et qu'une réception ultérieure des données considérées est préparée ou omise sur la base du résultat de cette comparaison, et que, dans le second cas, la réception d'une information relative au type d'une donnée immédiatement suivante est préparée.

2. Montage suivant la revendication 1, caractérisé par le fait que le début de l'information relative au type, émise par ledit autre dispositif (par exemple C) de transmission de données, déclenche dans ledit premier dispositif (par exemple D) de transmission de données, lors de son arrivée dans ce dernier, l'émission de l'assortiment de signalisations spécifiques aux types.

3. Montage suivant la revendication 1, caractérisé par le fait que simultanément plusieurs informations relatives aux types, qui concernent plusieurs données, de différents types, présentes simultanément pour leur transmission, sont transmises et qu'aussi bien dans le premier que dans l'autre dispositif de transmission de données, la comparaison est réalisée, de façon correspondante, à plusieurs reprises et que les données du type de données, qui doivent par conséquent être transmises ensuite, sont déterminées sur la base d'une suite de priorités, mémorisée dans les deux dispositifs de transmission de données, en rapport avec tous les types de données.

4. Montage suivant la revendication 1, caractérisé par le fait que le début d'émission d'une part de l'information relative au type et d'autre part de l'assortiment de signalisations spécifiques aux types est exécuté par un troisième dispositif commun, par exemple un dispositif de commande commun.

5. Montage suivant la revendication 1, caractérisé par le fait que respectivement une information relative au type et respectivement un assortiment de signalisations spécifiques aux types sont émises par chacun des deux dispositifs de transmission de données en direction de l'autre dispositif respectif de transmission de données, dans chacun des deux dispositifs de transmission de données, que l'une des émissions reçues est sélectionnée de façon correspondante en fonction de l'information de type respectivement émise, et que pour les types de données pouvant être émises par chacun des deux dispositifs de transmission de données, les valeurs de priorité sont mémorisées dans ces deux dispositifs et que lors de l'obtention de deux signalisations sélectionnées, l'une des deux est déterminée en fonction de ces valeurs de priorité.

**Claims**

1. Circuit arrangement for setting up a transmission link for telecommunication systems, particularly telephone exchanges in which there is sent ahead of the messages of one of a plurality of different possible message types to be transmitted in each case one corresponding type information on the message type which is in each case actually given, and in which, in dependence on the possibly continuously changing operating situation, of two message transmitting facilities (C, D) equipped for transmitting and/or receiving messages and preferably at least partially also for processing these messages, one (for example D) is ready to receive or not, depending on the operating situation given at the time and on the announced message type, for a message to be sent out by the, in each case, other message transmitting facility (for example C), and in which a signal relating to the readiness or non-readiness is transmitted in opposition to the direction of the type information before a message transmission for releasing or suppressing this transmission, and in which the messages, information items and signals are transmitted in bit portions of a uniform word format, characterized in that the circuit arrangement is developed in such a manner that it causes an assortment of individual type-specific signals, relating to each of the different message types to be transmitted at the same time as the type information in the opposite direction, that is to say from one message transmitting facility (for example D) to the other message transmitting facility (for example C), of which type-specific signals each signals to the said other message transmitting facility (for example C) the respective readiness or non-readiness individually with respect to each of the various message types possible, and that a comparison of the type information with the relevant type-specific signal in the other message transmitting facility (for example C) leads to the release of the message transmission or its suppression or displacement in time, and that likewise a comparison of the type information with the relevant type-specific signal occurs in one message transmitting facility (for example D) and that as a result thereof a subsequent reception of the relevant message is prepared or skipped, and that in the latter case the reception of a type information of a next-following message is prepared.

2. Circuit arrangement according to Claim 1, characterized in that the beginning of the type information sent out by the said other message transmitting facility (for example C) initiates, on its arrival in the said one message transmitting facility (for example D), the sending-out of the assortment of type-specific signals.

3. Circuit arrangement according to Claim 1, characterized in that several type information items, which relate to several messages of different message types simultaneously present for transmission are transmitted at the same time, and that the comparison is correspondingly effected several times both in one and in the other message transmitting facility, and that, on the basis of a priority sequence stored in both message transmitting facilities and relating to all messages types, the message of the message type which is accordingly subsequently to be transmitted is determined.

4. Circuit arrangement according to Claim 1, characterized in that the beginning of the sending-out, on the one hand, of the type information and, on the other hand, of the assortment of type-specific signals is effected by a common third facility, for example a common control facility.

5. Circuit arrangement according to Claim 1, characterized in that one type information each and one assortment of type-specific signals each is sent out by each of the two message transmitting facilities to the respective other message transmitting facility, that one of the received signals is correspondingly selected in each of the two message transmitting facilities on the basis of the type information sent out in each case, and that priority values are stored in both message transmitting facilities for the message types which can be sent by each of the two message transmitting facilities, and that, when two selected signals are obtained, one is determined in accordance with these priority values.